(19) Europäisches Patentamt / European Patent Office / Office européen des brevets

(11) **EP 2 600 110 B1**

(12) **EUROPÄISCHE PATENTSCHRIFT**

(45) Veröffentlichungstag und Bekanntmachung des Hinweises auf die Patenterteilung:
**19.03.2014   Patentblatt 2014/12**

(51) Int Cl.:
***G01D 5/12*** *(2006.01)*

(21) Anmeldenummer: **11191194.7**

(22) Anmeldetag: **29.11.2011**

(54) **Verfahren zur Nutzung der Signale eines Transducers mit n realen Signalen für einen Winkelencoder und Winkelencoder zur Durchführung eines solchen Verfahrens**

Method for the use of transducer signals with n real signals for an angle encoder and angle encoder for carrying out such a method

Procédé d'utilisation des signaux d'un transducteur avec n signaux réels pour un encodeur angulaire et encodeur angulaire destiné à l'exécution du procédé

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.06.2013   Patentblatt 2013/23**

(73) Patentinhaber: **SICK STEGMANN GmbH 78166 Donaueschingen (DE)**

(72) Erfinder: **Basler, Stefan 78086 Brigachtal (DE)**

(74) Vertreter: **Patentanwälte Westphal, Mussgnug & Partner Am Riettor 5 78048 Villingen-Schwenningen (DE)**

(56) Entgegenhaltungen:
**DE-A1- 19 628 286      JP-A- 8 114 464
JP-A- 2007 166 687      US-A- 5 160 886
US-A1- 2004 174 162**

**Beschreibung**

Die Erfindung betrifft ein Verfahren zur Nutzung der Signale eines Transducers mit n realen Signalen für einen Winkelencoder, wobei die durch die n realen Signale realisierten n idealen Signale dieselbe Periode aufweisen und so gegeneinander phasenverschoben sind, dass die n Signale gleichmäßig über eine Periode verteilt sind und einen Winkelencoder zur Durchführung eines solchen Verfahrens.

Winkelencoder arbeiten üblicherweise mit einem Paar von Cosinus- und Sinus-Signalen $I_{cos}$, $I_{sin}$. Während einerseits eine Verwendung derartiger Signale zweckmäßig ist, weil für sie eine Vielzahl wohletablierter Berechnungs- und Analysemethoden existieren, wäre es gleichzeitig wünschenswert, den Effekt von Messfehlern zu reduzieren und so die Genauigkeit der erhaltenen Winkelinformation zu steigern.

Grundsätzlich kommt man diesem Ziel durch die Verwendung von Transducern näher, die als Ausgangsdaten n Signale $I_1,...,I_n$, die insbesondere Sinus- bzw. Cosinus-Signale sind, aufweisen, die bevorzugt eine identische Periode aufweisen und so relativ zueinander phasenverschoben sind, dass sie sich gleichmäßig über eine Periode verteilen. Ein konkretes Beispiel wäre ein Transducer, welcher Signale ausgibt, die sich mit 8 Sinus-Kurven beschreiben lassen, die relativ zu den jeweils zueinander benachbarten Kurven, betrachtet im Bogenmaß um jeweils $\pi/4$ verschoben sind. Die gesamte Periode im Bogenmaß beträgt $2\pi$, so dass durch diese relative Phasenverschiebung zueinander eine gleichmäßige Verteilung über eine Periode erfolgt.

Die US 2004/174162 A1 offenbart eine Vorrichtung zur Detektion der Winkelposition. Es werden drei Phasensignale erfasst, die innerhalb einer Gesamtperiode um je 120 Grad phasenverschoben sind. Die drei, gleiche Nominalamplitude aufweisenden Phasensignale werden zur Nutzung der Signale des Drehmelders erfasst und einem 3 zu 2 Phasenkonverter zugeführt, der sie in zwei reale Signale umwandelt.

DE 196 28 286 A1 beschreibt einen Drehmelder zum Erfassen der Winkelposition mit vier Phasen, die innerhalb einer Gesamtperiode um je 90 Grad phasenverschoben sind und gleiche Nominalamplituden aufweisen. Zur Nutzung der Signale des Drehmelders werden die vier Phasensignale erfasst und einem 4 zu 2 Phasenkonverter zugeführt, der sie in zwei reale Signale umwandelt.

Auch die US 5 160 886 A offenbart einen vierphasigen Winkelencoder und ein entsprechendes Umwandlungsverfahren.

Allerdings stellt sich bei der Verwendung eines derartigen Transcoders für einen Winkelencoder das Problem, die so erhaltenen Daten auf eine einfache und effiziente Weise in eine Winkelinformation in Form eines Paars von Cosinus- und Sinus-Signalen $I_{cos}$, $I_{sin}$ umzuwandeln.

Verschärft wird dieses Problem dadurch, dass die erwünschte Genauigkeit des Winkelencoders in der Regel so hoch ist, dass sich Abweichungen eines realen Transducers gegenüber seinem idealen Verhalten bemerkbar machen. Konkret gibt es bei jedem kommerziell erhältlichen Transducer, der nominell als Ausgangsdaten n Signale bereitstellt, die eine identische Periode aufweisen und so relativ zueinander phasenverschoben sind, dass sie sich gleichmäßig über eine Periode verteilen, Abweichungen hinsichtlich der Amplituden und hinsichtlich der Phasenlagen, d.h. hinsichtlich der Gleichmäßigkeit der Verteilung über eine Periode, der tatsächlich bereitgestellten Signale $I_1,...,I_n$ voneinander. Die n realen Signale $I_1,...,I_n$ weichen also von den nominell vom Transducer bereitgestellten Signalen ab, weshalb in dieser Patentschrift zwischen den realen Signalen und den spezifikationsgemäßen idealen Signalen unterschieden wird. Die n realen Signale $I_1,...,I_n$ eines gegebenen Transducers sind somit mit individuellen, von Transducer zu Transducer verschiedenen systematischen Fehlern behaftet.

Es besteht somit das Problem, ein Verfahren zur Nutzung der Signale eines Transducers mit n realen Signalen für einen Winkelencoder bereitzustellen, mit dem eine einfache und effiziente Umwandlung der realen Signale in ein Paar von einem Sinus- und einem Cosinussignal möglich ist, und das ferner eine einfache Korrektur der systematischen Fehler eines derartigen Transducers erlaubt sowie einen für die Verwendung dieses Verfahrens geeigneten Winkelencoder bereitzustellen.

Dieses Problem wird gelöst durch ein Verfahren mit den Merkmalen des Patentanspruchs 1 und einen Winkelencoder mit den Merkmalen des Patentanspruchs 2. Vorteilhafte Weiterentwicklungen der Erfindung sind Gegenstand der Unteransprüche.

Das erfindungsgemäße Verfahren dient zur Nutzung der Signale eines Transducers mit n realen Signalen $I_1$, $I_2,..., I_n$ für einen Winkelencoder, wobei die durch die n realen Signale $I_1$, $I_2,..., I_n$ realisierten n idealen Signale dieselbe Amplitude und dieselbe Periode aufweisen und so gegeneinander phasenverschoben sind, dass die n idealen Signale gleichmäßig über eine Periode verteilt sind, wobei bei dem Verfahren die n realen Signale $I_1$, $I_2$, ..., $I_n$ ausgelesen und in zwei reale Signale $I_{cos}$, $I_{sin}$ umgewandelt werden. Insbesondere ist die Anwendung von sinus- oder cosinusförmigen realen Signalen $I_1$, $I_2,..., I_n$ zweckmäßig.

Erfindungswesentlich ist dabei, dass die Umwandlung durch Anwendung einer Transformationsmatrix T der Gestalt

$$T = \begin{pmatrix} \dfrac{1}{a_1}\cos\varphi_1 & \dfrac{1}{a_2}\cos\varphi_2 & \dots & \dfrac{1}{a_n}\cos\varphi_n \\[2mm] \dfrac{1}{a_1}\sin\varphi_1 & \dfrac{1}{a_2}\sin\varphi_2 & \dots & \dfrac{1}{a_n}\sin\varphi_n \end{pmatrix}$$

$$(Gl. \ 1)$$

erfolgt. Konkret kann aus den n realen Signalen ein Vektor mit n Einträgen gebildet werden, der durch Anwendung der Transformationsmatrix T auf ihn in einen Vektor, das erwünschte Paar von Cosinus- und Sinus-Signalen $I_{cos}$, $I_{sin}$ beinhaltet überführt wird. Mathematisch ausgedrückt gilt also:

$$\begin{pmatrix} I_{cos} \\ I_{sin} \end{pmatrix} = \begin{pmatrix} \dfrac{1}{a_1}\cos\varphi_1 & \dfrac{1}{a_2}\cos\varphi_2 & \dots & \dfrac{1}{a_n}\cos\varphi_n \\[2mm] \dfrac{1}{a_1}\sin\varphi_1 & \dfrac{1}{a_2}\sin\varphi_2 & \dots & \dfrac{1}{a_n}\sin\varphi_n \end{pmatrix} \begin{pmatrix} I_1 \\ \vdots \\ I_n \end{pmatrix}$$

$$(Gl. \ 2)$$

Die konkreten Werte $a_i$, bzw. $\varphi_i$ der Transformationsmatrix T hängen dabei davon ab, wie die Korrektur der systematischen Abweichungen zwischen den Amplituden und Phasen der realen Signale durchgeführt wird.

Einerseits besteht erfindungsgemäß die Möglichkeit, jeweils vor der Anwendung der Transformationsmatrix T auf die n realen Signale $I_1$, $I_2$,..., $I_n$ auf die realen Signale jeweils eine Phasenkorrektur und eine Amplitudenkorrektur anzuwenden, wobei die Phasenkorrektur Abweichungen des jeweiligen realen Signals $I_1$, $I_2$,...,$I_n$ von der Phasenlage des jeweiligen idealen Signals kompensiert und wobei die Amplitudenkorrektur Abweichungen des jeweiligen realen Signals $I_1$, $I_2$, .., $I_n$ von der Amplitude des jeweiligen idealen Signals kompensiert. Dies kann insbesondere durch eine hardwaremäßige Nachbearbeitung erfolgen, indem jedem realen Signal $I_1$, $I_2$, ..., $I_n$ ein Offsetsteller, ein Amplitudenverstärker und ein Phasenschieber zugeordnet wird, wobei mehrstufige Korrekturen sich als vorteilhaft erweisen.

Wenn derartig korrigierte Signale verwendet werden, gilt in der Transformationsmatrix T nach Gleichung 1:

$$a_i = 1 \ \forall i = 1 \dots n$$

$$(Gl.3)$$

und

$$\varphi_i = \left( (i-1)\frac{2\pi}{n} \right) \ \forall i = 1 \dots n \,.$$

$$(Gl.4)$$

Allerdings ist der Hardwareaufwand, der für die Korrektur getrieben werden muss, relativ hoch und verteuert den Winkelencoder in erheblichem Maße. Alternativ kann erfindungsgemäß auch für einen gegebenen Winkelencoder zunächst in einem Kalibrationsschritt für jedes reale Signal $I_1$, $I_2$, ..., $I_n$ eine normierte Amplitude $A_{i,i=1\dots n}$ und eine absolute Phasenlage $\Phi_{i,i=1\dots n}$ bestimmt werden.

Die "normierte Amplitude" $A_{i,i=1\dots n}$ gibt dabei für jedes reale periodische Signal die Zahl an, durch die der betragsmäßig höchste Wert, der innerhalb einer Periode auftritt, dividiert werden muss, um den Wert 1 zu ergeben. Die "absolute Phasenlage" $\Phi_{i,i=1\dots n}$ erhält man, indem man ein Signal als Referenzsignal festlegt, dessen Periode als Referenzperiode betrachtet wird und für die anderen Signale jeweils ermittelt, um welchen Wert das Argument einer das Referenzsignal beschreibenden trigonometrischen Funktion angepasst werden muss, um eine bestmögliche Übereinstimmung zwischen Referenzsignal und gerade betrachtetem Signal zu erzielen.

Vorzugsweise erfolgt die Ermittlung im Bogenmaß durch Bestimmung des Bogenmaßes, um das das Referenzsignal verschoben werden muss, um eine bestmögliche Übereinstimmung mit dem Signal, dessen Phasenlage $\Phi_i$ ermittelt werden soll, zu erhalten.

Die Kenntnis dieser Größen ermöglicht es, dass die Transformationsmatrix T unmittelbar auf die realen Signale $(I_1, I_2, ..., I_n)$ angewendet werden wenn die Koeffizienten der Transformationsmatrix T folgendermaßen festgelegt werden:

$$a_i = A_i \; \forall i = 1 \dots n \; \text{ und } \; \varphi_i = \Phi_i \; \forall i = 1 \dots n \, .$$

Der Winkelencoder zur Durchführung des erfindungsgemäßen Verfahrens weist einen Transducer mit n realen Signalen $I_1, I_2, ..., I_n$ auf, wobei die durch die n realen Signale $I_1, I_2, ..., I_n$ realisierten n idealen Signale dieselbe Amplitude und dieselbe Periode aufweisen und so gegeneinander phasenverschoben sind, dass die n idealen Signale gleichmäßig über eine Periode verteilt sind. Ferner verfügt er über Mittel zum Auslesen der n realen Signale $I_1, I_2, ..., I_n$ und Mittel zum Umwandeln der n realen Signale in zwei reale Signale $I_{cos}$, $I_{sin}$ aufweist, welche dann auf aus dem Stand der Technik für Winkelencoder bekannte Art und Weise in die gewünschte Winkelinformation umgewandelt werden.

Erfindungswesentlich ist dabei, dass die Mittel zum Umwandeln zur Anwendung einer Transformationsmatrix T der Gestalt

$$T = \begin{pmatrix} \dfrac{1}{a_1}\cos\varphi_1 & \dfrac{1}{a_2}\cos\varphi_2 & \dots & \dfrac{1}{a_n}\cos\varphi_n \\ \dfrac{1}{a_1}\sin\varphi_1 & \dfrac{1}{a_2}\sin\varphi_2 & \dots & \dfrac{1}{a_n}\sin\varphi_n \end{pmatrix}$$

geeignet sind.

In einer besonders kostengünstigen Ausführungsform ist der Winkelencoder ferner so ausgeführt, dass die n realen Signale $I_1, I_2, ..., I_n$ des Transducers unmittelbar, d.h. insbesondere unmodifiziert, an die Mittel zum Auslesen der n realen Signale $I_1, I_2, ..., I_n$ angelegt sind, so dass insbesondere keine hardwarebasierte Modifikation des Signals erfolgt.

Die Erfindung kann insbesondere mit unterschiedlich aufgebauten Transducern realisiert werden. In der Regel werden n Empfangselemente verwendet, die auf eine in Abhängigkeit von der Position der zu überwachenden Drehachse periodisch variierende Größe sensitiv sind und diese in ein elektrisches Ausgangssignal übersetzen. Die Phasenverschiebung der n Empfangselemente untereinander wird durch die Anordnung der n Empfangselemente relativ zueinander und zu der zu überwachenden Drehachse bestimmt. In der Praxis haben sich magnetische und optische Systeme besonders bewährt. Bei den magnetischen Systemen wird ein sich periodisch mit der Winkelposition der zu überwachenden Achse änderndes Signal durch n magnetfeldsensitive Sensoren überwacht. Bei optischen Systemen kann die Polarisation mit x*n Polarisationsfiltern mit n Polarisationseinrichtungen auf x*n Photodioden zum Nachweis ebenso verwendet werden, wie ein Zweimaskenverfahren mit n Maskenelementen auf n Photodioden, bei dem Durchlicht mit einer Codescheibe als erster Maske ausgesendet wird und eine zweite Maske auf dem jeweiligen Abtaster bzw. Empfänger zum Einsatz kommt.

Die Erfindung wird nachfolgend anhand einer Figur näher erläutert. Die Figur verdeutlicht das Funktionsprinzip der Erfindung am Beispiel eines vereinfacht dargestellten optischen Winkelencoders 100 mit einem Transducer 110, Mitteln 120 zum Auslesen der n realen Signale $I_1, I_2, ..., I_n$ in Form eines Satzes von Analog-Digital-Wandlern und einem Mittel 130 zum Umwandeln der n realen Signale in zwei reale Signale $I_{cos}$, $I_{sin}$ aufweist, durch Anwendung einer Transformationsmatrix T der Gestalt

$$T = \begin{pmatrix} \dfrac{1}{a_1}\cos\varphi_1 & \dfrac{1}{a_2}\cos\varphi_2 & \dots & \dfrac{1}{a_n}\cos\varphi_n \\ \dfrac{1}{a_1}\sin\varphi_1 & \dfrac{1}{a_2}\sin\varphi_2 & \dots & \dfrac{1}{a_n}\sin\varphi_n \end{pmatrix} .$$

An der nicht dargestellten Achse, die durch den Winkelencoder 100 überwacht wird, ist eine Quelle für linear polarisiertes Licht so angeordnet, dass sie sich mit der Achse mitdreht. Die Polarisationsrichtung des von dieser Quelle abgegebenen Lichtes ändert sich somit periodisch in Abhängigkeit von der zu ermittelnden Winkelposition der Achse.

Der Transducer 110 weist n Photodioden 111 mit schematisch dargestellten Transimpedanzverstärkern 112 auf, wobei jeder Photodiode 111 ein Polarisationsfilter 113 vorgeschaltet ist, der in jeweils unterschiedlicher Orientierung angeordnet ist. Die Figur ist im Hinblick auf die variierende Orientierung insofern als schematisch anzusehen, als nur verdeutlicht wird, dass die Orientierung der Polarisationsfilter variiert, es können und sollen aus ihr keine konkreten Werte für diese Orientierung, die ohnehin von der Größe der Zahl n abhängig wäre, abgeleitet werden. Durch die Wahl jeweilige Orientierung und somit der Durchlassrichtung der Polarisationsfilter 113 wird der Phasenversatz zwischen den Signalen $I_1$, $I_2$,..., $I_n$, die die einzelnen Photodioden bereitstellen, definiert.

Die so erzeugten realen Signale $I_1$, $I_2$, ..., $I_n$ werden durch die Mittel 120 zum Auslesen der n realen Signale $I_1$, $I_2$, ..., $I_n$ in Form eines Satzes von Analog-Digital-Wandlern ausgelesen und in digitaler Form dem Mittel 130 zum Umwandeln der n realen Signale in zwei reale Signale $I_{cos}$, $I_{sin}$ zugeführt. Das Umwandeln wird vorzugsweise durch Anwendung der Transformationsmatrix T der Gestalt

$$T = \begin{pmatrix} \dfrac{1}{a_1}\cos\varphi_1 & \dfrac{1}{a_2}\cos\varphi_2 & ... & \dfrac{1}{a_n}\cos\varphi_n \\ \dfrac{1}{a_1}\sin\varphi_1 & \dfrac{1}{a_2}\sin\varphi_2 & ... & \dfrac{1}{a_n}\sin\varphi_n \end{pmatrix}$$

in digitaler Form, durchgeführt, so dass das Mittel 120 zum Umwandeln der n realen Signale in zwei reale Signale $I_{cos}$, $I_{sin}$ als ein Mikroprozessor mit etwaig notwendigen Speicherbauelementen oder Mikrocomputer ausgeführt werden kann. Hier werden diese Signale in digitalisierte Form bereitgestellt, es ist aber auch eine analoge Ausgabe denkbar.

Bezugszeichenliste:

| | |
|---|---|
| 100 | Winkelencoder |
| 110 | Transducer |
| 111 | Photodiode |
| 112 | Transimpedanzverstärker |
| 113 | Polarisationsfilter |
| 120 | Mittel zum Auslesen |
| 130 | Mittel zum Umwandeln |

**Patentansprüche**

1. Verfahren zur Nutzung der Signale eines Transducers (110) mit n realen Signalen ($I_1$, $I_2$, ..., $I_n$) für einen Winkelencoder (100), wobei die durch die n realen Signale ($I_1$, $I_2$, ..., $I_n$) realisierten n idealen Signale dieselbe Amplitude und dieselbe Periode aufweisen und so gegeneinander phasenverschoben sind, dass die n idealen Signale gleichmäßig über eine Periode verteilt sind, wobei bei dem Verfahren die n realen Signale ($I_1$, $I_2$,..., $I_n$) ausgelesen und in zwei reale Signale ($I_{cos}$, $I_{sin}$) umgewandelt werden, wobei die Umwandlung durch Anwendung einer Transformationsmatrix T der Gestalt

$$T = \begin{pmatrix} \dfrac{1}{a_1}\cos\varphi_1 & \dfrac{1}{a_2}\cos\varphi_2 & \cdots & \dfrac{1}{a_n}\cos\varphi_n \\ \dfrac{1}{a_1}\sin\varphi_1 & \dfrac{1}{a_2}\sin\varphi_2 & \cdots & \dfrac{1}{a_n}\sin\varphi_n \end{pmatrix}$$

erfolgt,

,

**dadurch gekennzeichnet, dass** entweder vor der Anwendung der Transformationsmatrix T auf die n realen Signale $(I_1, I_2, ..., I_n)$ jeweils eine Phasenkorrektur und eine Amplitudenkorrektur angewendet wird, wobei die Phasenkorrektur Abweichungen des jeweiligen realen Signals $(I_1, I_2, ..., I_n)$ von der Phasenlage des jeweiligen idealen Signals kompensiert und wobei die Amplitudenkorrektur Abweichungen des jeweiligen realen Signals $(I_1, I_2, ..., I_n)$ von der Amplitude des jeweiligen idealen Signals kompensiert und dass in der Transformationsmatrix gilt:

$$a_i = 1\;\forall i = 1\dots n \quad \text{und } \varphi_i = \left((i-1)\frac{2\pi}{n}\right)\forall i = 1\dots n.$$

oder dass zunächst in einem Kalibrationsschritt für jedes reale Signal $(I_1, I_2, ..., I_n)$ eine normierte Amplitude $A_{i,i=1\dots n}$ und eine absolute Phasenlage $\Phi_{i,1=1\dots n}$ bestimmt wird, dass die Transformationsmatrix T unmittelbar auf die realen Signale $(I_1, I_2, ..., I_n)$ angewendet wird und dass in der Transformationsmatrix T gilt:

$$a_i = A_i\;\forall i = 1\dots n \quad \text{und } \varphi_i = \Phi_i\;\forall i = 1\dots n.$$

**2.** Winkelencoder (100) zur Durchführung des Verfahrens nach Anspruch 1,
wobei der Winkelencoder einen Transducer (110) mit n realen Signalen $(I_1, I_2, ..., I_n)$, wobei die durch die n realen Signale $(I_1, I_2, ..., I_n)$ realisierten n idealen Signale dieselbe Amplitude und dieselbe Periode aufweisen und so gegeneinander phasenverschoben sind, dass die n idealen Signale gleichmäßig über eine Periode verteilt sind, aufweist und dass der Winkelencoder (100) Mittel zum Auslesen (120) der n realen Signale $(I_1, I_2, ..., I_n)$ und Mittel zum Umwandeln (130) der n realen Signale in zwei reale Signale $(I_{cos}, I_{sin})$ aufweist, wobei die Mittel zum Umwandeln (130) zur Anwendung einer Transformationsmatrix T der Gestalt

$$T = \begin{pmatrix} \dfrac{1}{a_1}\cos\varphi_1 & \dfrac{1}{a_2}\cos\varphi_2 & \cdots & \dfrac{1}{a_n}\cos\varphi_n \\ \dfrac{1}{a_1}\sin\varphi_1 & \dfrac{1}{a_2}\sin\varphi_2 & \cdots & \dfrac{1}{a_n}\sin\varphi_n \end{pmatrix}$$

vorgesehen sind, **dadurch gekennzeichnet, dass** entweder vor der Anwendung der Transformationsmatrix T auf die n realen Signale $(I_1, I_2, ..., I_n)$ jeweils eine Phasenkorrektur und eine Amplitudenkorrektur angewendet wird, wobei die Phasenkorrektur Abweichungen des jeweiligen realen Signals $(I_1, I_2, ..., I_n)$ von der Phasenlage des jeweiligen idealen Signals kompensiert und wobei die Amplitudenkorrektur Abweichungen des jeweiligen realen Signals $(I_1, I_2, ..., I_n)$ von der Amplitude des jeweiligen idealen Signals kompensiert und wobei für die Transformationsmatrix gilt:

$$a_i = 1\;\forall i = 1\dots n \quad \text{und } \varphi_i = \left((i-1)\frac{2\pi}{n}\right)\forall i = 1\dots n.$$

oder dass zunächst in einem Kalibrationsschritt für jedes reale Signal ($I_1$, $I_2$, ..., $I_n$) eine normierte Amplitude $A_{i,i=1...n}$ und eine absolute Phasenlage $\Phi_{i,i=1...n}$ bestimmt wird, dass die Transformationsmatrix T unmittelbar auf die realen Signale ($I_1$, $I_2$, ..., $I_n$) angewendet wird und dass in der Transformationsmatrix T gilt:

$$a_i = A_i \; \forall i = 1 \dots n \; \text{ und } \; \varphi_i = \Phi_i \; \forall i = 1 \dots n \,.$$

3. Winkelencoder (100) nach Anspruch 2,
**dadurch gekennzeichnet, dass** die n realen Signale ($I_1$, $I_2$, ..., $I_n$) unmodifiziert an die Mittel zum Auslesen (120) der n realen Signale ($I_1$, $I_2$, ..., $I_n$) angelegt sind.

**Claims**

1. Method for the use of the signals of a transducer (110) having n real signals ($I_1$, $I_2$, ..., $I_n$) for an angle encoder (100), wherein the n ideal signals realised by the n real signals ($I_1$, $I_2$, ... , $I_n$) have the same amplitude and the same period and are phase-shifted relative to one another such that the n ideal signals are uniformly distributed over a period, wherein in the method the n real signals ($I_1$, $I_2$, ..., In) are selected and converted into two real signals ($I_{cos}$, $I_{sin}$), wherein the conversion is made by applying a transformation matrix T of the form

$$T = \begin{pmatrix} \dfrac{1}{a_1}\cos\varphi_1 & \dfrac{1}{a_2}\cos\varphi_2 & \dots & \dfrac{1}{a_n}\cos\varphi_n \\ \dfrac{1}{a_1}\sin\varphi_1 & \dfrac{1}{a_2}\sin\varphi_2 & \dots & \dfrac{1}{a_n}\sin\varphi_n \end{pmatrix}$$

**characterised in that** either before applying the transformation matrix T to the n real signals ($I_1$, $I_2$, ..., $I_n$) in each case a phase correction and an amplitude correction are applied, wherein the phase correction compensates deviations of the particular real signal ($I_1$, $I_2$, ..., In) from the phase position of the particular ideal signal and wherein the amplitude correction compensates deviations of the particular real signal ($I_1$, $I_2$, ..., $I_n$) from the amplitude of the particular ideal signal, and **in that** in the transformation matrix:

$$a_i = 1 \; \forall i = 1 \dots n \; \text{and} \; \varphi_i = \left((i-1)\frac{2\pi}{n}\right) \forall i = 1 \dots n\,.$$

or **in that** in a calibration step for each real signal ($I_1$, $I_2$, ..., $I_n$) a standardised amplitude $A_{i,\,i=1...n}$ and an absolute phase position $\Phi_{i,\,i=1...n}$ is first determined, **in that** the transformation matrix T is applied directly to the real signals ($I_1$, $I_2$, ..., $I_n$), and **in that** in the transformation matrix

$$a_i = A_i \; \forall i = 1 \dots n \; \text{and} \; \varphi_i = \Phi_i \; \forall i = 1 \dots n\,.$$

2. Angle encoder (100) for implementing the method according to claim 1, wherein the angle encoder has a transducer (110) having n real signals ($I_1$, $I_2$, ..., $I_n$), wherein the n ideal signals realised by the n real signals ($I_1$, $I_2$, ... , $I_n$) have the same amplitude and the same period and are phase-shifted relative to one another such that the n ideal signals are uniformly distributed over a period, and wherein the angle encoder (100) has a means (120) for selection of the n real signals ($I_1$, $I_2$, ... , $I_n$) and a means for conversion (130) of the n real signals into two real signals ($I_{cos}$, $I_{sin}$), wherein the means for conversion (130) is provided for applying a transformation matrix T of the form

$$T = \begin{pmatrix} \dfrac{1}{a_1}\cos\varphi_1 & \dfrac{1}{a_2}\cos\varphi_2 & \cdots & \dfrac{1}{a_n}\cos\varphi_n \\[2ex] \dfrac{1}{a_1}\sin\varphi_1 & \dfrac{1}{a_2}\sin\varphi_2 & \cdots & \dfrac{1}{a_n}\sin\varphi_n \end{pmatrix}$$

**characterised in that** either before applying the transformation matrix T to the n real signals ($I_1$, $I_2$, ..., $I_n$) in each case a phase correction and an amplitude correction are applied, wherein the phase correction compensates deviations of the particular real signal ($I_1$, $I_2$, ..., $I_n$) from the phase position of the particular ideal signal and wherein the amplitude correction compensates deviations of the particular real signal ($I_1$, $I_2$, ..., $I_n$) from the amplitude of the particular ideal signal, and wherein for the transformation matrix:

$$a_i = 1 \ \forall i = 1 \ldots n \ \text{and} \ \varphi_i = \left( (i-1)\frac{2\pi}{n} \right) \ \forall i = 1 \ldots n.$$

or **in that** in a calibration step for each real signal ($I_1$, $I_2$, ..., $I_n$) a standardised amplitude $A_{i,\,i=i\ldots n}$ and an absolute phase position $\Phi_{i,\,i=1\ldots n}$ is first determined, **in that** the transformation matrix T is applied directly to the real signals ($I_1$, $I_2$, ..., $I_n$), and **in that** in the transformation matrix

$$a_i = A_i \ \forall i = 1 \ldots n \ \text{and} \ \varphi_i = \Phi_i \ \forall i = 1 \ldots n.$$

3. Angle encoder (100) according to claim 2, **characterised in that** the n real signals ($I_1$, $I_2$, ..., $I_n$) are fed in non-modified form to the means for selection (120) of the n real signals ($I_1$, $I_2$, ... , $I_n$).

## Revendications

1. Procédé d'utilisation des signaux d'un transducteur (110) comprenant n signaux réels ($I_1$, $I_2$, ..., $I_n$) pour un codeur angulaire (100), les n signaux idéaux réalisés par les n signaux réels ($I_1$, $I_2$, ..., $I_n$) présentant la même amplitude et la même période et ayant les uns par rapport aux autres un décalage de phase tel que les n signaux idéaux soient répartis uniformément sur une période, selon le procédé, les n signaux réels ($I_1$, $I_2$, ..., $I_n$) étant extraits et transformés en deux signaux réels ($I_{cos}$, $I_{sin}$), la transformation étant effectuée en utilisant une matrice de transformation T ayant la forme suivante :

$$T = \begin{pmatrix} \dfrac{1}{a_1}\cos\varphi_1 & \dfrac{1}{a_2}\cos\varphi_2 & \cdots & \dfrac{1}{a_n}\cos\varphi_n \\[2ex] \dfrac{1}{a_1}\sin\varphi_1 & \dfrac{1}{a_2}\sin\varphi_2 & \cdots & \dfrac{1}{a_n}\sin\varphi_n \end{pmatrix}$$

**caractérisé en ce que**
soit avant l'utilisation de la matrice de transformation T on applique respectivement sur les n signaux réels ($I_1$, $I_2$, ..., $I_n$) une correction de phase et une correction d'amplitude, la correction de phase compensant des écarts du signal réel ($I_1$, $I_2$, ..., $I_n$) respectif avec la position de phase du signal idéal respectif, et la correction d'amplitude compensant des écarts du signal réel ($I_1$, $I_2$, ..., $I_n$) respectif avec l'amplitude du signal idéal respectif, et, dans la matrice de transformation :

$$a_i = 1 \ \forall i = 1 \ldots n \quad et \quad \varphi_i = \left( (i-1)\frac{2\pi}{n} \right) \ \forall i = 1 \ldots n$$

soit, dans une étape de calibration, on détermine tout d'abord, pour chaque signal réel ($I_1$, $I_2$, ..., $I_n$) une amplitude

$A_{i,i=1...n}$ normalisée et une position de phase absolue $\Phi_{i,i=1...n}$, on applique directement la matrice de transformation T aux signaux réels $(I_1, I_2, ..., I_n)$, et, dans la matrice de transformation T :

$$a_i = A_i \forall i = 1...n \quad et \quad \varphi_i = \Phi_i \forall_i = 1...n$$

**2.** Codeur angulaire (100) permettant la mise en oeuvre du procédé conforme à la revendication 1, dans lequel le codeur angulaire comporte un transducteur (110) comprenant n signaux réels $(I_1, I_2, ..., I_n)$, les n signaux idéaux réalisés par les n signaux réels $(I_1, I_2, ..., I_n)$ présentant la même amplitude et la même période et ayant les uns par rapport aux autres un décalage de phase tel que les n signaux idéaux soient uniformément répartis sur une période, et le codeur angulaire (100) comportant des moyens permettant l'extraction (120) des n signaux réels $(I_1, I_2, ..., I_n)$ et des moyens permettant la transformation (130) des n signaux réels en deux signaux réels $(I_{cos}, I_{sin})$, les moyens permettant la transformation (130) étant réalisés pour permettre l'application d'une matrice de transformation ayant la forme suivante :

$$\begin{pmatrix} \dfrac{1}{a_1}\cos\varphi_1 & \dfrac{1}{a_2}\cos\varphi_2 & ... & \dfrac{1}{a_n}\cos\varphi_n \\ \dfrac{1}{a_1}\sin\varphi_1 & \dfrac{1}{a_2}\sin\varphi_2 & ... & \dfrac{1}{a_n}\sin\varphi_n \end{pmatrix}$$

**caractérisé en ce que**
soit avant l'utilisation de la matrice de transformation T on applique respectivement sur les n signaux réels $(I_1, I_2, ..., I_n)$ une correction de phase et une correction d'amplitude, la correction de phase compensant des écarts du signal réel $(I_1, I_2, ..., I_n)$ respectif avec la position de phase du signal idéal respectif, et la correction d'amplitude compensant des écarts du signal réel $(I_1, I_2, ..., I_n)$ respectif avec l'amplitude du signal idéal respectifs, et, dans la matrice de transformation :

$$a_i = 1 \, \forall i = 1...n \quad et \quad \varphi_i = \left( (i\text{-}1)\,\frac{2\pi}{n} \right) \forall_i = 1...n$$

soit, on détermine tout d'abord dans une étape de calibration, pour chacun des signaux réels $(I_1, I_2, ..., I_n)$ une amplitude normalisée $A_{i,i=1...n}$ et une position de phase absolue $\Phi_{i,i=1...n}$, on applique directement la matrice de transformation T aux signaux réels $(I_1, I_2, ..., I_n)$, et, dans la matrice de transformation T :

$$a_i = A_i \forall i = 1...n \quad et \quad \varphi_i = \Phi_i \forall_i = 1...n$$

**3.** Codeur angulaire (100) conforme à la revendication 2,
**caractérisé en ce que**
les n signaux réels $(I_1, I_2, ..., I_n)$ sont appliqués sans être modifiés sur les moyens permettant l'extraction (120) des n signaux réels $(I_1, I_2, ..., I_n)$.

$I_1$

$I_2$

$I_n$

$I_{sin}$

$I_{cos}$

(T)

112

113

111

120

130

113

113

111

110

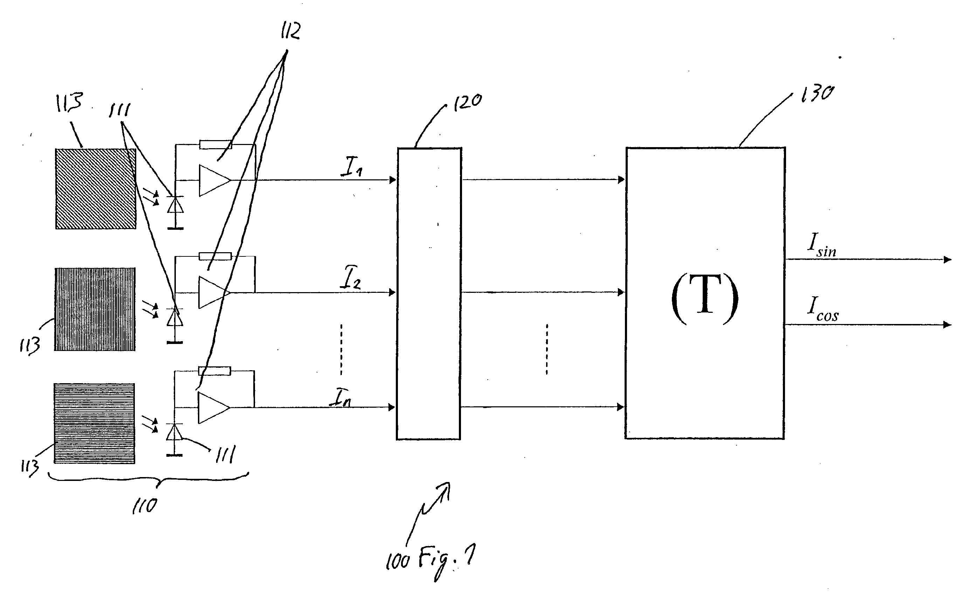

100 Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2004174162 A1
- DE 19628286 A1
- US 5160886 A